# EUROPÄISCHE PATENTSCHRIFT

(11) **EP 0 440 036 B1**
(45) Veröffentlichungstag und Bekanntmachung des Hinweises auf die Patenterteilung: **12.06.1996**
(21) Anmeldenummer: 91100396.0
(22) Anmeldetag: 15.01.1991
(51) Int. Cl.: C08L 21/00, C08G 16/02, C08J 5/10

(54) **Kautschukmischungen und daraus hergestellte Vulkanisate mit verbesserter Haftfähigkeit an Festigkeitsträgern**
Rubber compositions and vulcanisates obtained therefrom having an improved adhesion to reinforcing materials
Compositions de caoutchouc et vulcanisats obtenus à partir de celles-ci ayant une adhérence améliorée à des matériaux de renforcement

(30) Priorität: 20.01.1990 DE 4001606
(43) Veröffentlichungstag der Anmeldung: 07.08.1991
(73) Patentinhaber: HOECHST AKTIENGESELLSCHAFT, D-65926 Frankfurt am Main (DE)
(72) Erfinder: Hesse, Wolfgang, dr., W-6204 Taunusstein (DE); Leicht, Erhard, Dr., W-6238 Hofheim/Taunus (DE); Sattelmeyer, Richard, Dr., W-6200 Wiesbaden (DE)

(56) Entgegenhaltungen:
- EP-A- 0 036 515
- EP-A- 0 052 286
- DE-B- 2 254 379

## Beschreibung

Die Erfindung betrifft Kautschukmischungen, die vulkanisierbar sind und eine verbesserte Haftfähigkeit an Festigkeitsträgern auf Stahlcord- und Textilfaserbasis besitzen sowie ein Verfahren zur Herstellung dieser Kautschukmischungen. Die Kautschukmischungen enthalten als Haftungspromotor modifizierte Novolake, die durch gleichzeitige Reaktion mehrwertiger Phenole mit Aldehyden und ungesättigten Kohlenwasserstoffen unter Säurekatalyse bei erhöhter Temperatur nach bekannten Methoden erhältlich sind. Die solchermaßen modifizierten Novolake besitzen den weiteren Vorteil, daß durch ihre Mitverwendung bei der Herstellung und Verarbeitung der Kautschukmischungen keine toxischen Belastungen von Umwelt und Beschäftigten auftreten, wie dies bekanntlich bei der Herstellung und Verarbeitung vergleichbarer Kautschukmischungen, die freies Resorcin enthaltende bzw. abspaltende Haftungspromotoren enthalten, durch frei werdendes toxisches Material der Fall ist.

Bei der Herstellung von technischen Gummiartikeln ist zur Erzielung einer guten Haftung des Kautschuks an Festigkeitsträgern, wie zum Beispiel Textilfasergeweben oder Stahlcord, die Verwendung von Resorcin Stand der Technik, wie er u.a. in einer Reihe von Patentschriften, z.B. US-A 4 148 769, DE-B 20 02 023, DE-B 24 14 798, beschrieben ist. Demzufolge können zur Erzielung der gewünschten guten Haftungseigenschaften Resorcin oder daraus hergestellte Vorkondensate als spezifisch wirksame Haftungspromotoren verwendet werden. Als Vorkondensate des Resorcins werden dabei Produkte eingesetzt, wie sie z.B. durch Kondensation von Formaldehyd oder Formaldehyd abspaltenden Verbindungen mit Resorcin oder Gemischen aus Resorcin und einem weiteren Phenol erhalten werden können. Da die Herstellung der Vorkondensate bekanntlich mit einem deutlichen stöchiometrischen Überschuß an Resorcin bzw. an Resorcin + Phenol, bezogen auf Formaldehyd, erfolgt, enthalten die auf diese Weise gefertigten Produkte einen erheblichen Anteil an freien phenolischen Ausgangskomponenten, der insbesondere bei Resorcin bis zu 20 Gew.-% betragen kann, bezogen auf das hergestellte Vorkondensat.

In der EP-A 0 052 286 werden Kautschukmischungen beschrieben, die neben vulkanisierbarem Kautschuk Vulkanisationsmittel, Härtungsmittel, Füllstoffe, übliche Zusatzstoffe und Phenolharze mit höchstens 30 % der eingesetzten Phenolkomponente an Resorcin enthalten.

Bezüglich der Gummiherstellung zeigt der bisher bekannt gewordene Stand der Technik generell aber den schwerwiegenden Nachteil, daß bei der Einarbeitung des Resorcins oder seiner Vorkondensate in die Kautschukmischung ein starkes Rauchen und Qualmen auftritt, da das Einmischen bei verhältnismäßig hohen Temperaturen erfolgt und insbesondere das freie Resorcin dabei zu einem merklichen Anteil in die Atmosphäre entweicht. Dies ist jedoch wegen der toxischen Eigenschaften des Resorcins in hohem Maße unerwünscht. Der genannte gravierende Nachteil tritt auch bei der Verwendung von Vorkondensaten des Resorcins auf. Darüber hinaus besitzen das Resorcin und dessen Mischkondensate mit Phenol infolge ihrer ausgeprägten polaren Strukturen nur geringe Affinitäten zu den üblichen unpolaren Kautschuktypen.

Der vorliegenden Erfindung lag somit die Aufgabe zugrunde, die genannten Nachteile bei der Verwendung von Resorcin bzw. dessen Vorkondensaten zu überwinden und ein Produkt verfügbar zu machen, das bei der Gummiherstellung problemlos in Kautschukmischungen einsetzbar ist, ohne die vorteilhafte Wirkung des Resorcins zu verlieren und ohne die Umwelt zu belasten bzw. mit der Gummiherstellung befaßte Personen gesundheitlich zu gefährden.

Es wurde nun überraschenderweise gefunden, daß man die vorgenannten Nachteile überwinden kann, wenn man in den Kautschukmischungen das Resorcin bzw. dessen Vorkondensate mit Aldehyden durch modifizierte Novolake ersetzt, die durch gleichzeitige Reaktion von mehrwertigen Phenolen mit Aldehyden und ungesättigten Kohlenwasserstoffen in Gegenwart saurer Katalysatoren bei erhöhter Temperatur hergestellt wurden.

Durch die Erfindung lassen sich die vorgenannten Nachteile vermeiden und die Belastung der Umwelt und der mit solchen Stoffen umgehenden Beschäftigten durch toxikologisch bedenkliche Materialien deutlich senken. Die erfindungsgemäß hergestellten Kautschukmischungen lassen sich leichter und vorteilhafter verarbeiten, vergleichsweise zu entsprechenden Mischungen mit bekannten Haftungspromotoren auf Resorcinbasis, und führen infolge der weniger polaren Struktur der verwendeten modifizierten Novolake außerdem zu einer erhöhten Haftung der Gummimischungen an den Festigkeitsträgern. Ganz besonders wichtig ist auch die Feststellung, daß die erfindungsgemäß verbesserte Haftung nach intensiver Feuchtigkeitseinwirkung auf die vulkanisierten Kautschumischungen bei höheren Temperaturen einen geringeren Abfall zeigt als bei den bisher bekannten vergleichbaren vulkanisierten Systemen.

Gegenstand der Erfindung sind daher Kautschukmischungen, die vulkanisierbar sind und eine verbesserte Haftfähigkeit an Festigkeitsträgern auf Stahlcord- oder Textilfaserbasis besitzen, mit Gehalten an vulkanisierbarem Kautschuk, Vulkanisiermitteln, Härtungsmitteln, Füllstoffen und üblichen Zusatzstoffen sowie modifizierten Novolaken als Haftungspromotoren, die durch gleichzeitige Reaktion mehrwertiger einkerniger Phenole mit Aldehyden und ungesättigten Kohlenwasserstoffen in Gegenwart eines sauren Katalysators bei erhöhter Temperatur hergestellt wurden und < 1 Gew.-% an freien Ausgangsphenolen enthalten, sowie die Vulkanisate dieser Kautschukmischungen.

Die Herstellung der erfindungsgemäß verwendeten modifizierten Novolake kann nach bekannten Methoden erfolgen, wie sie z. B. in der DE-C 22 54 379 beschrieben sind.

Für die Herstellung der erfindungsgemäß verwendeten modifizierten Novolak-Harze können als Phenolkomponenten mehrwertige ein-oder mehrkernige Phenole, vorzugsweise solche, die mehrere Hydroxylgruppen am selben aromatischen Ring tragen, wie z.B. Pyrogallol, Hydrochinon, Brenzkatechin, Resorcin, vorzugsweise Resorcin, verwendet werden. Als mehrwertige und mehrkernige Phenole kommen auch Kondensationsprodukte aus einwertigen Phenolen und Oxoverbindungen infrage. Diese können als solche zugesetzt oder während der Reaktion in situ hergestellt werden.

Als Aldehyde können Alkanale oder Arylalkanale, vorzugsweise (C₁-C₁₀)-Alkanale bzw. (C₇-C₁₀)-Arylalkanale, wie z.B. Formaldehyd in wäßriger Lösung oder als Paraformaldehyd oder Trioxan, Acetaldehyd, auch in Form von Acetaldehyd abspaltenden Substanzen, höhere Aldehyde, wie z.B. Butyraldehyd, Hexanal, Oktanal, Nonanal, verwendet werden. Besonders bevorzugt sind Formaldehyd und Formaldehyd abspaltende Verbindungen.

Als ungesättigte Kohlenwasserstoffe können natürliche oder synthetische Verbindungen mit einer oder mehreren Kohlenstoff-Kohlenstoff-Doppelbindungen, im letzteren Fall auch konjugierten Doppelbindungen, verwendet werden. Als natürliche ungesättigte Verbindungen können ungesättigte Fettsäuren, die daraus abgeleiteten fetten Öle, Fettsäureamide oder Fettalkohole verwendet werden.

Geeignete Ausgangsverbindungen sind ferner ungesättigte Naturstoffe auf Terpenbasis, zum Beispiel Terpentinöl, Kolophonium. Als synthetische ungesättigte Kohlenwasserstoffverbindungen können Alkene, Diene oder noch höher ungesättigte Kohlenwasserstoffe verwendet werden, wie z.B. Buten, Isobuten, Isoocten, Isononen, Isododecen, oder zweifach ungesättigte Verbindungen, wie z.B. Butadien, Isopren, Chloropren, Dichlorbutadien, Dicyclopentadien. Geeignet sind auch acetylenisch ungesättigte Verbindungen, wie z.B. Acetylen oder (C₁-C₁₀)-Alkyl- bzw. Di(C₁-C₁₀)-alkyl-acetylene. Bevorzugt geeignet sind z.B. Vinylaromaten, insbesondere Vinyltoluol und besonders bevorzugt Styrol.

Als geeignete, mit Schwefel vulkanisierbare Kautschuktypen können z.B. vorzugsweise Naturkautschuk, Polyisopren, Polybutadien, Styrolbutadienkautschuk, Acrylnitrilkautschuk, Butylkautschuk, Ethylen-propylen-dienterpolymer-kautschuk oder deren Gemische, wie man sie üblicherweise in der Fahrzeugreifenindustrie oder zur Herstellung technischer Gummiwaren einsetzt, verwendet werden. Die weiteren üblichen Bestandteile können beispielsweise Füllstoffe, wie Ruße, Kieselsäuren, Kreide, Kaoline sowie Pigmente anorganischer oder organischer Natur, wie Titandioxid, Eisenoxid, Phthalocyaninfarbstoffe, sein. Weitere übliche Bestandteile sind z.B. Vulkanisationsmittel aus der Gruppe Schwefel und schwefelspendende Verbindungen sowie Vulkanisationshilfsmittel, wie z.B. Beschleuniger und Aktivatoren. Ebenfalls üblich ist die Verwendung von Zusatzstoffen, beispielsweise aus der Gruppe Stearinsäure, Zinkoxid, Alterungsschutzmittel, die Klebrigkeit erhöhende Harze, wie auch von Metallverbindungen zur zusätzlichen Verbesserung der Gummihaftung an Stahlcord, beispielsweise von Salzen des Cobalts oder Nickels einkettiger Carbonsäuren, vorzugsweise Naphthensäuren oder Isooctansäure. Zur Verbesserung der Verarbeitung sind ferner Zusätze von Mineralölen und Weichmachern, wie z.B. Phthalsäureestern, üblich.

Die Härtung der erfindungsgemäß verwendeten modifizierten Novolak-Harze kann durch den Zusatz von üblichen Härtungsmitteln, wie z.B. Hexamethylentetramin, oder von Methylenspendern in Form von Melaminharzen geeigneter Zusammensetzung, bewirkt werden. Die Melaminharze können dabei in Substanz als kristalline oder flüssige Produkte oder, bevorzugt, als vorteilhaft verarbeitbare, rieselfähige Produkte nach ihrer vorherigen Adsorption auf geeigneten festen Trägermaterialien eingesetzt werden.

Die erfindungsgemäßen vulkanisationsfähigen Kautschukmischungen können in üblicher Weise, z.B. in Innenmischern oder auf Mischwalzen, hergestellt werden. Dabei kann es vorteilhaft sein, zur besseren Verteilung der erfindungsgemäßen Haftungspromotoren die Mischungstemperatur während einer beliebigen Mischungsphase auf einen Wert über dem Schmelzbereich des zugegebenen Haftungspromotorharzes zu erhöhen. Es ist ferner wichtig, daß die Härtungsmittel zur Vermeidung einer vorzeitigen Reaktion mit den vernetzbaren Harzkomponenten möglichst erst am Ende des Mischvorganges bei nicht zu hohen Temperaturen (im allgemeinen bei 80 bis 100 °C) eingearbeitet werden.

Im übrigen kann die Komponentenauswahl und die Festlegung ihrer prozentualen Mengenanteile in den vulkanisierbaren Kautschukmischungen nach bekannten Kriterien erfolgen. Die Vermischung der Komponenten bei höheren Temperaturen kann ebenfalls in bekannter Weise, z.B. bei 100 bis 160 °C, erfolgen, u.a. z.B. in üblichen heizbaren Innenmischern oder auf üblichen heizbaren Mischwalzen. Ebenso kann auch die Vulkanisation erfindungsgemäßer, vulkanisierbarer Kautschukmischungen in bekannter Weise bei üblichen Temperaturen in üblichen heizbaren Vorrichtungen, gegebenenfalls unter Druck, erfolgen.

Der Anteil an erfindungsgemäßen Haftungspromotoren in den vulkanisierbaren Kautschukmischungen ist nicht kritisch und kann vorzugsweise bis zu 20 Gew.-%, insbesondere bis zu 15 Gew.-%, besonders bevorzugt 0,5 bis 10 Gew.-%, bezogen auf die vulkanisierbare Kautschukmischung, betragen. Auch die Mitverwendung anderer bekannter Haftungspromotoren ist, soweit sie keine nachteiligen bzw. schädlichen Wirkungen verursachen bzw. entfalten, im allgemeinen möglich.

Die Zusammensetzung der erfindungsgemäß als Haftungspromotoren verwendeten modifizierten Novolake ist in einem breiten Bereich variierbar. Vorzugsweise beträgt das Molverhältnis ihrer Bestandteile Mehrwertige Phenole : Ungesättigten Kohlenwasserstoffen : Aldehyden = 1 : 0,1 : 0,3 bis 1 : 1,5 : 0,95, insbesondere 1 : 0,4 : 0,5 bis 1 : 1,1 : 0,8. Besonders bevorzugte Bestandteile sind dabei Resorcin, Formaldehyd und Styrol. Zu weiteren Charakterisierung der erfindungsgemäß als Haftungspromotoren verwendbaren modifizierten Novolak-Harze können z.B. noch der Schmelzpunkt, die Viskosität ihrer Lösungen in einem geeigneten organischen Lösungsmittel sowie die Hydroxylzahl des Harzes herangezogen werden, wobei diese Werte in den bei Novolaken üblichen Bereichen liegen. Vorzugsweise werden solche Harze verwendet, die unter Normalbedingungen in fester, kleinteiliger Form vorliegen. Dabei sollte der Schmelzpunkt zumindest so hoch liegen, daß die Produkte beim Lagern bei Raumtemperatur und beim Transport nicht verklumpen können.

Die erfindungsgemäßen vulkanisierbaren Kautschukmischungen, die nach bekannten Methoden hergestellt, verarbeitet und vulkanisiert werden können, eignen sich sehr gut zur Herstellung von technischen Gummiartikeln, vorzugsweise von solchen, die Festigkeitsträger auf Stahlcord- oder Textilfaserbasis enthalten. Sie können insbesondere zur Herstellung von Schläuchen, Treibriemen, Förderbändern und Fahrzeugreifen verwendet werden, da sie sowohl hervorragende Haftungseigenschaften auf den genannten Festigkeitsträgern, als auch eine überraschend gute Eigenschaftskonstanz bei Feuchtigkeitseinwirkung zeigen.

Die Erfindung wird durch die nachstehenden Beispiele näher erläutert. Es bedeuten GT = Gewichtsteile und % = Gewichtsprozent, sofern nichts anderes angegeben ist.

### Beispiel 1

### Herstellung eines modifizierten Novolaks

770 GT Resorcin, 140 GT Toluol und 0,75 GT konzentrierte Schwefelsäure werden unter Rückfluß in einem mit Rührer, Thermometer und Rückflußkühler mit Wasserabscheider versehenen Reaktionsgefäß erhitzt. Nach Erreichen von 140 °C werden der Mischung unter Rühren innerhalb von drei Stunden aus zwei getrennten Dosiergefäßen 454 GT einer 37 gew.-%igen wäßrigen Formaldehyd-Lösung und 364 GT Styrol getrennt so zugetropft, daß die in der Zeiteinheit zulaufenden Mengen an Styrol und wäßrigem Formaldehyd den jeweiligen Gesamtmengen proportional sind. Während des Zulaufs erhöht sich die Temperatur der Mischung auf 150 °C. Nach 3,5 Stunden Erhitzen am Rückfluß haben sich im Wasserabscheider 382 GT einer wäßrigen Phase abgeschieden, die 0,37 % Formaldehyd und 0,15 % Resorcin enthält. Dem Ansatz werden sodann 0,96 GT Magnesiumoxid zugegeben und das Lösungsmittel unter einem auf 100 mbar verminderten Druck bei 200 °C herausdestilliert. Anschließend wird der Destillationsrückstand abgekühlt und man erhält 1170 GT eines rotbraunen Harzes mit einem Schmelzpunkt von 130 °C. Der Gehalt des Harzes an freiem Resorcin beträgt < 1 Gew.-%.

Die Viskosität einer 50 gew.-%igen Lösung des Harzes in Methoxypropanol beträgt bei 20 °C 5300 mPa·s.

### Beispiel 2

Das Beispiel 1 wird wiederholt mit der Abänderung, daß 340 GT 37 gew.-%ige wäßrige Formaldehyd-Lösung statt 454 GT, und 582 GT Styrol statt 364 GT, eingesetzt werden. Es werden 1387 GT eines rotbraunen Harzes mit einem Schmelzpunkt von 80 °C erhalten. Der Gehalt des Harzes an freiem Resorcin beträgt < 1 Gew.-%. Die Viskosität einer 50 gew.-%igen Lösung des Harzes in Methoxypropanol beträgt bei 20 °C 552 mPa·s.

### Beispiel 3

Es werden die nach Beispiel 1 und 2 hergestellten modifizierten Novolake jeweils auf ihre Wirkungen in vulkanisierbaren Kautschukmischungen geprüft. Hierzu wird zunächst eine Kautschuk-Grundmischung A bei ca. 150°C durch intensives Vermischen der Ausgangskomponenten hergestellt. Von dieser Kautschuk-Grundmischung A werden jeweils entsprechende Mengen entnommen und diese in einer weiteren Mischstufe B bei Temperaturen oberhalb von 100 °C mit dem zu prüfenden Haftungspromotor vermischt und danach, in einer dritten Mischstufe C, bei Temperaturen unter 100 °C die Einmischung des Schwefels, des Beschleunigers und des Härtungsmittels gemäß nachstehenden Zusammensetzungen vorgenommen:

### Kautschuk-Grundmischung A, bestehend aus:

- 100 GT: Naturkautschuk
- 40 GT: Ruß
- 15 GT: Aktive Kieselsäure
- 5 GT: Zinkoxid
- 1 GT: Stearinsäure
- 1 GT: Alterungsschutzmittel

### Mischstufe B:

- 162 GT: Kautschuk-Grundmischung A werden jeweils vorgelegt und bei einer Temperatur von 130 °C
- 2,5 GT: Haftungspromotorharz aus Beispiel 1 (= Beispiel 3) bzw. aus Beispiel 2 (= Beispiel 4) bzw. übliches Resorcin (= nicht erfindungsgemäßes Vergleichsbeispiel 1) eingemischt.

### Mischstufe C:

- 164,5 GT: Mischstufe B werden jeweils vorgelegt und bei einer Temperatur von 90 °C
- 4,0 GT: Schwefel
- 0,8 GT: Benzothiazyl-2-sulfenmorpholid und
- 3,85 GT: Melaminharz-Pulver/65 %-ig auf Trägermaterial eingemischt.

Das Verhalten des jeweiligen Gemisches beim Einmischen des jeweiligen Haftungspromotors in der Mischstufe B und beim anschließenden Mischen in der Mischstufe C sowie auch bei der nachfolgenden Vulkanisation der aus der Mischstufe C jeweils erhaltenen vulkanisierbaren Mischung während 60 Minuten bei 145 °C in einer Prüfkörperform ist untersucht worden.

An den nach der Vulkanisation als Prüfkörper resultierenden Vulkanisaten der Beispiele 3 und 4 sowie des Vergleichsbeispiels 1 werden nach den in der Praxis üblichen Methoden folgende Eigenschaftsmerkmale geprüft:
a) - Reißfestigkeit und Reißdehnung gemäß DIN 5350
b) - Ausreißkraft und Bedeckungsgrad bei der Stahlcordhaftungsprüfung.

Besonders wichtig sind die Ergebnisse der Stahlcordhaftungsprüfung, bei welcher, gemäß einer üblichen Methode, in besonderen Formkörpern Stahlcord der Konstruktion 4 x 0,25 mm mit einem Kupfergehalt der Messingauflage von ca. 67 % in die vulkanisierbare Kautschukmischung eingebettet und diese dann vulkanisiert wird. Danach erfolgt eine Lagerung der vulkanisierten Proben bei 23 °C und 50 % relativer Luftfeuchtigkeit (r.F.) sowie bei 90 °C und 100 % relativer Luftfeuchtigkeit (r.F.). Anschließend wird die zum Herausreißen der Stahlcordfäden aus der vulkanisierten Gummimischung erforderliche Kraft gemessen und der Bedeckungsgrad des Stahlcords beurteilt.

Hierunter ist die am herausgezogenen Cord mit Gummi bedeckte Drahtfläche zu verstehen, die in Abstufungen von 10 % geschätzt und durch Zahlenwerte von 1 bis 10 bewertet wird. Die Bewertungsziffern 1, 2, 3 ... 10 bedeuten folglich 10, 20, 30 .... 100 % bedeckte Drahtfläche.

Mit den erfindungsgemäßen, vulkanisierten Kautschukmischungen der Beispiele 3 und 4 werden höhere Ausreißkräfte und Bedeckungsgrade erzielt als bei dem Vergleichssystem mit Resorcin des Vergleichsbeispiels 1. Darüber hinaus treten bei den erfindungsgemäßen Beispielen 3 und 4 praktisch keine Belästigungen der Beschäftigten durch Rauchentwicklung oder Geruch während der Verarbeitung und praktisch auch keine Belastung der Umwelt durch toxisches Material, vergleichsweise zu dem Vergleichsbeispiel 1 mit Resorcin, auf.

## Patentansprüche (Patentansprüche für folgende(n) Vertragsstaat(en): AT, BE, CH, DE, FR, GB, GR, IT, LI, LU, NL)

1. Kautschukmischungen, die vulkanisierbar sind und eine verbesserte Haftfähigkeit an Festigkeitsträgern auf Stahlcord- oder Textilfaserbasis besitzen, mit Gehalten an vulkanisierbarem Kautschuk, Vulkanisiermitteln, Härtungsmitteln, Füllstoffen und üblichen Zusatzstoffen sowie modifizierten Novolaken als Haftungspromotoren, die durch gleichzeitige Reaktion mehrwertiger einkerniger Phenole mit Aldehyden und ungesättigten Kohlenwasserstoffen in Gegenwart eines sauren Katalysators bei erhöhter Temperatur hergestellt wurden und < 1 Gew.-% an freien Ausgangsphenolen enthalten, sowie die Vulkanisate dieser Kautschukmischungen.

2. Kautschukmischungen nach Anspruch 1, dadurch gekennzeichnet, daß der Haftungspromotor aus Resorcin, einem (C₁-C₁₀)-Aldehyd und einem ungesättigten Kohlenwasserstoff hergestellt wurde.

3. Kautschukmischungen nach Anspruch 1 oder 2, dadurch gekennzeichnet, daß der Haftungspromotor aus Resorcin, Formaldehyd oder einer Formaldehyd abspaltenden Verbindung und einem Vinylaromaten hergestellt wurden.

4. Kautschukmischungen nach einem oder mehreren der Ansprüche 1 bis 3, dadurch gekennzeichnet, daß bei der Herstellung des Haftungspromotors das Molverhältnis von Mehrwertigen Phenolen : Ungesättigten Kohlenwasserstoffen : Aldehyden 1 : 0,1 : 0,3 bis 1 : 1,5 : 0,95, vorzugsweise 1 : 0,4 : 0,5 bis 1 : 1,1 : 0,8, betrug.

5. Kautschukmischungen nach einem oder mehreren der Ansprüche 1 bis 4, dadurch gekennzeichnet, daß sie bis zu 20 Gew.-% Haftungspromotor, bezogen auf die vulkanisierbare Kautschukmischung, enthalten.

6. Verwendung der Kautschukmischungen nach einem oder mehreren der Ansprüche 1 bis 5 zur Herstellung von technischen Gummiartikeln, vorzugsweise von solchen, die Festigkeitsträger auf Stahlcord- oder Textilfaserbasis enthalten.

7. Verwendung der Kautschukmischungen nach Anspruch 6 zur Herstellung von Schläuchen, Treibriemen, Förderbändern und Fahrzeugreifen.

## Patentansprüche (Patentansprüche für folgende(n) Vertragsstaat(en): ES)

1. Verfahren zur Herstellung von Kautschukmischungen, die vulkanisierbar sind und eine verbesserte Haftfähigkeit an Festigkeitsträgern auf Stahlcord- oder Textilfaserbasis besitzen, mit Gehalten an vulkanisierbarem Kautschuk, Vulkanisiermitteln, Härtungsmitteln, Füllstoffen und üblichen Zusatzstoffen sowie modifizierten Novolaken als Haftungspromotoren, die durch gleichzeitige Reaktion mehrwertiger einkerniger Phenole mit Aldehyden und ungesättigten Kohlenwasserstoffen in Gegenwart eines sauren Katalysators bei erhöhter Temperatur hergestellt wurden und < 1 Gew.-% an freien Ausgangsphenolen enthalten, sowie die Vulkanisate dieser Kautschukmischungen.

2. Verfahren nach Anspruch 1, dadurch gekennzeichnet, daß der Haftungspromotor aus Resorcin, einem (C₁-C₁₀)-Aldehyd und einem ungesättigten Kohlenwasserstoff hergestellt wurde.

3. Verfahren nach Anspruch 1 oder 2, dadurch gekennzeichnet, daß der Haftungspromotor aus Resorcin, Formaldehyd oder einer Formaldehyd abspaltenden Verbindung und einem Vinylaromaten hergestellt wurde.

4. Verfahren nach einem oder mehreren der Ansprüche 1 bis 3, dadurch gekennzeichnet, daß bei der Herstellung des Haftungspromotors das Molverhältnis von Mehrwertigen Phenolen : Ungesättigten Kohlenwasserstoffen : Aldehyden 1 : 0,1 : 0,3 bis 1 : 1,5 : 0,95, vorzugsweise 1 : 0,4 : 0,5 bis 1 : 1,1 : 0,0, betrug.

5. Verfahren nach einem oder mehreren der Ansprüche 1 bis 4, dadurch gekennzeichnet, daß der Kautschukmischung bis zu 20 Gew.-% Haftungspromotor, bezogen auf die vulkanisierbare Kautschukmischung, beigemischt werden.

6. Verwendung der Kautschukmischungen, hergestellt nach einem oder mehreren der Ansprüche 1 bis 5, zur Herstellung von technischen Gummiartikeln, vorzugsweise von solchen, die Festigkeitsträger auf Stahlcord- oder Textilfaserbasis enthalten.

7. Verwendung der Kautschukmischungen nach Anspruch 6 zur Herstellung von Schläuchen, Treibriemen, Förderbändern und Fahrzeugreifen.

## Claims (Claims for the following Contracting State(s): AT, BE, CH, DE, FR, GB, GR, IT, LI, LU, NL)

1. Rubber mixtures which are vulcanizable and have improved adhesion to reinforcing supports based on steel cord or textile fibers and which contain vulcanizable rubber, vulcanizing agents, curing agents, fillers and customary additives, and modified novolaks as adhesion promotors, said mixtures being prepared by simultaneous reaction of polyhydric mononuclear phenols with aldehydes and unsaturated hydrocarbons in the presence of an acid catalyst at elevated temperature and containing less than 1 % by weight of free starting phenols, and the vulcanized rubbers obtained from these rubber mixtures.

2. Rubber mixtures as claimed in claim 1, wherein the adhesion promotor was prepared from resorcinol, a (C₁-C₁₀)-aldehyde and an unsaturated hydrocarbon.

3. Rubber mixtures as claimed in claim 1 or 2, wherein the adhesion promotor was prepared from resorcinol, formaldehyde or a compound releasing formaldehyde and a vinylaromatic compound.

4. Rubber mixtures as claimed in one or more of claims 1 to 3, wherein the molar ratio of polyhydric phenols : unsaturated hydrocarbons : aldehydes during the preparation of the adhesion promotor is 1 : 0.1 : 0.3 to 1 : 1.5 : 0.95, preferably 1 : 0.4 : 0.5 to 1 1.1 : 0.8.

5. Rubber mixtures as claimed in one or more of claims 1 to 4, which contain up to 20 % by weight of adhesion promotor, relative to the vulcanizable rubber mixture.

6. Use of the rubber mixtures as claimed in one or more of claims 1 to 5 for the manufacture of industrial rubber articles, preferably of articles containing reinforcing supports based on steel cord or textile fibers.

7. Use of the rubber mixtures as claimed in claim 6 for the manufacture of tubings, fan belts, conveyor belts and tires.

## Claims (Claims for the following Contracting State(s): ES)

1. Process for the preparation of rubber mixtures which are vulcanizable and have improved adhesion to reinforcing supports based on steel cord or textile fibers and which contain vulcanizable rubber, vulcanizing agents, curing agents, fillers and customary additives, and modified novolaks as adhesion promotors, said mixtures being prepared by simultaneous reaction of polyhydric mononuclear phenols with aldehydes and unsaturated hydrocarbons in the presence of an acid catalyst at elevated temperature and containing less than 1 % by weight of free starting phenols, and the vulcanized rubbers obtained from these rubber mixtures.

2. Process as claimed in claim 1, wherein the adhesion promotor was prepared from resorcinol, a (C₁-C₁₀)-aldehyde and an unsaturated hydrocarbon.

3. Process as claimed in claim 1 or 2, wherein the adhesion promotor was prepared from resorcinol, formaldehyde or a compound releasing formaldehyde and a vinylaromatic compound.

4. Process as claimed in one or more of claims 1 to 3, wherein the molar ratio of polyhydric phenols : unsaturated hydrocarbons : aldehydes during the preparation of the adhesion promotor is 1 : 0.1 : 0.3 to 1 : 1.5 : 0.95, preferably 1 : 0.4 : 0.5 to 1 : 1.1 : 0.8.

5. Process as claimed in one or more of claims 1 to 4, wherein the rubber mixture contains an admixture of up to 20 % by weight of adhesion promotor, relative to the vulcanizable rubber mixture.

6. Use of the rubber mixtures prepared as claimed in one or more of claims 1 to 5 for the manufacture of industrial rubber articles, preferably of articles containing reinforcing supports based on steel cord or textile fibers.

7. Use of the rubber mixtures as claimed in claim 6 for the manufacture of tubings, fan belts, conveyor belts and tires.

## Revendications (Revendications pour l'(les) Etat(s) contractant(s) suivant(s): AT, BE, CH, DE, FR, GB, GR, IT, LI, LU, NL)

1. Mélanges de caoutchouc qui sont vulcanisables et qui possèdent une adhérence améliorée aux supports solides, comme des supports de résistance à base de câbles d'acier ou de textiles, contenant du caoutchouc vulcanisable, des agents de vulcanisation, des agents durcisseurs, des charges et d'autres adjuvants, ainsi que des novolaques modifiées en tant que promoteurs d'adhérence, mélanges que l'on prépare par réaction simultanée de phénols multifonctionnels monocycliques avec des aldéhydes et des hydrocarbures insaturés, en présence d'un catalyseur acide, à une température élevée, et qui contiennent < 1 % en poids en phénols de départ libres, ainsi que des vulcanisats de ces mélanges de caoutchouc.

2. Mélanges de caoutchouc selon la revendication 1, caractérisés en ce qu'on prépare le promoteur d'adhérence à partir de la résorcine, d'un aldéhyde en C₁-C₁₀ et d'un hydrocarbure insaturé.

3. Mélanges de caoutchouc selon la revendication 1 ou 2, caractérisés en ce qu'on prépare le promoteur d'adhérence à partir de la résorcine, du formaldéhyde ou d'un composés qui libère le formaldéhyde et d'un composé vinylaromatique.

4. Mélanges de caoutchouc selon une ou plusieurs des revendications 1 à 3, caractérisés en ce que dans la préparation du promoteur d'adhérence, le rapport des phénols multifonctionnels : hydrocarbures insaturés : aldéhydes est de 1 : 0,1 : 0,3 à 1 : 1,5 : 0,95, de préférence de 1 : 0,4 : 0,5 à 1 : 1,1 : 0,8.

5. Mélanges de caoutchouc selon une ou plusieurs des revendications 1 à 4, caractérisés en ce qu'ils contiennent jusqu'à 20% en poids de promoteur d'adhérence, par rapport au mélange de caoutchouc vulcanisable.

6. Utilisation des mélanges de caoutchouc selon une ou plusieurs des revendications 1 à 5, pour la fabrication d'articles en caoutchouc, de préférence d'articles qui contiennent des supports de résistance, comme ceux à base de câbles d'acier ou de textile.

7. Utilisation des mélanges de caoutchouc selon la revendication 6 pour la fabrication de tuyaux souples, de courroies d'entraînement, de bandes transporteuses et de pneus de véhicules.

## Revendications (Revendications pour l'(les) Etat(s) contractant(s) suivant(s): ES)

1. Procédé pour la préparation de mélanges de caoutchouc qui sont vulcanisables et qui possèdent une adhérence améliorée aux supports solides de résistance à base de câbles d'acier ou de textiles, contenant du caoutchouc vulcanisable, des agents de vulcanisation, des agents durcisseurs, des charges et d'autres adjuvants, ainsi que des novolaques modifiées en tant que promoteurs d'adhérence, mélanges que l'on prépare par réaction simultanée de phénols multifonctionnels monocycliques avec des aldéhydes et des hydrocarbures insaturés, en présence d'un catalyseur acide, à une température élevée, et qui contiennent < 1 % en poids en phénols de départ libres, ainsi que des vulcanisats de ces mélanges de caoutchouc.

2. Procédé selon la revendication 1, caractérisé en ce qu'on prépare le promoteur d'adhérence à partir de la résorcine, d'un aldéhyde en C₁-C₁₀ et d'un hydrocarbure insaturé.

3. Procédé selon la revendication 1 ou 2, caractérisé en ce qu'on prépare le promoteur d'adhérence à partir de la résorcine, du formaldéhyde ou d'un composés qui libère le formaldéhyde et d'un composé vinylaromatique.

4. Procédé selon une ou plusieurs des revendications 1 à 3, caractérisés en ce que dans la préparation du promoteur d'adhérence, le rapport des phénols multifonctionnels : hydrocarbures insaturés : aldéhydes est de 1 : 0,1 : 0,3 à 1 : 1,5 : 0,95, de préférence 1 : 0,4 : 0,5 à 1 : 1,1 0,8.

5. Procédé selon une ou plusieurs des revendications 1 à 4, caractérisés en ce que le mélange de caoutchouc contient jusqu'à 20% en poids de promoteur d'adhérence, par rapport au mélange de caoutchouc vulcanisable.

6. Utilisation des mélanges de caoutchouc préparé selon une ou plusieurs des revendications 1 à 5, pour la fabrication d'articles en caoutchouc, de préférence d'articles qui contiennent des supports de résistance, comme ceux à base de câbles d'acier ou de textile.

7. Utilisation des mélanges de caoutchouc selon la revendication 6 pour la fabrication de tuyaux souples, de courroies d'entraînement, de bandes transporteuses et de pneus de véhicules.
